# EUROPÄISCHE PATENTSCHRIFT

(11) **EP 1 663 455 B1**
(45) Veröffentlichungstag und Bekanntmachung des Hinweises auf die Patenterteilung: **04.11.2009**
(21) Anmeldenummer: 04764837.3
(22) Anmeldetag: 04.09.2004
(51) Int. Cl.: B01D 53/58, B01D 47/06, C05C 1/00

(54) **VERFAHREN ZUR ENTFERNUNG VON AMMONIAK UND STAUB AUS EINEM ABGAS, DAS BEI DER HERSTELLUNG VON HARNSTOFF ANFÄLLT**
METHOD FOR REMOVING AMMONIA AND DUST FROM A WASTE GAS THAT RESULTS DURING THE PRODUCTION OF UREA
PROCEDE D'ELIMINATION D'AMMONIAC ET DE POUSSIERES CONTENUS DANS DES GAZ BRULES, PRODUITS LORS DE LA PRODUCTION D'URÉE

(30) Priorität: 02.10.2003 DE 10346519
(43) Veröffentlichungstag der Anmeldung: 07.06.2006
(73) Patentinhaber: Uhde GmbH, 44141 Dortmund (DE)
(72) Erfinder: NIEHUES, Paul, 44265 Dortmund (DE); FRANZRAHE, Harald, 44289 Dortmund (DE)
(74) Vertreter: Meinke, Dabringhaus und Partner GbR
(86) Internationale Anmeldenummer: PCT/EP2004/009886
(87) Internationale Veröffentlichungsnummer: WO 2005/032696

(56) Entgegenhaltungen:
- EP-A- 0 440 932
- EP-A- 0 514 902
- EP-A- 1 151 785
- DE-A- 3 306 664
- GB-A- 2 315 435

## Beschreibung

Die Erfindung betrifft ein Verfahren zur Entfernung von Ammoniak und Staub aus einem Abgas, das in einem Herstellprozess bei der Herstellung von Harnstoff, anfällt, bei welchem das Abgas in einen ersten Wäscher und ein aus dem Herstellprozess stammendes Kühlgas in einen zweiten Wäscher eingeleitet werden und in einen Wäscher gereinigtes oder ungereinigtes Prozesswasser und in den anderen Wäscher eine wässrige Lösung eingeleitet wird, wobei sowohl das Abgas als auch das Kühlgas vor dem Austritt aus dem jeweiligen Wäscher durch wenigstens einen Tropfenabscheider hindurchtritt.

Bei der Herstellung von ammoniumhaltigen Düngemitteln bzw. bei Düngemitteln, die Ammoniak abspalten können, z.B. Harnstoff enthaltende Düngemittel, fallen in verschiedenen Verfahrensstufen ammoniak- und staubhaltige Abluftströme an, die vor der Abgabe an die Umwelt oder die Rückführung in den Prozess gereinigt werden müssen. Solche Abgase entstehen insbesondere bei der Granulation und der Kühlung.

Zur Entfernung von Staub aus aus der Granulation austretendem Abgas und aus dem Granulatkühlgas ist ein gattungsgemäßes Verfahren bekannt (International Fertilizer Industry Association, IFA Technical Conference, Marrakech Morocco, 28. September bis 1. Oktober 1998: Vortragsunterlage "Saskferco urea plant revamping" von Pan Orphanides und Peter Orphanides). Zur Durchführung dieses Verfahrens sind zwei wäscher vorgesehen, die jeweils im oberen Bereich mit wenigstens einem Tropfenabscheider (Demister) ausgerüstet sind. Dabei wird in den ersten Wäscher das aus der Granulation stammende Abgas eingeleitet, während in den zweiten Wäscher das Kühlgas eingeleitet wird. Zur Reinigung wird Zusatzwasser, vorzugsweise gereinigtes oder ungereinigtes Prozesswasser, in den zweiten Wäscher unterhalb des Tropfenabscheiders im Gegenstrom zum Kühlgas eingeleitet. Die aus dem zweiten Wäscher austretende wässrige Lösung wird anschließend ebenfalls im Gegenstrom zum zu reinigenden Abgas in den ersten Wäscher eingeleitet.

In der Praxis hat sich herausgestellt, dass dieses bekannte verfahren noch verbesserungswürdig ist. Da die aus dem ersten Wäscher austretende wässrige Lösung weiter verarbeitet bzw. weiter verwandt werden muss, besteht das Bestreben, die Harnstoffkonzentration in der wässrigen Lösung so hoch wie möglich einzustellen, um den Energieaufwand für die Eindampfung der austretenden wässrigen Lösung möglichst gering zu halten. Bei dem bisherigen Verfahren sind jedoch dieser Maximalkonzentration Grenzen gesetzt. Der bisherige Maximalwert der Harnstoffkonzentration in der wässrigen Lösung im ersten Wäscher liegt bei etwa 30 bis 45 %, höhere Konzentrationen sind nicht möglich, da trotz des Tropfenabscheiders sich nicht, vollständig vermeiden läßt, dass entsprechend mit Harnstoff beladene Tropfen im austretenden Abgas verbleiben und in diesem eine entsprechend hohe Harnstoffkonzentration verursachen.

Aus DE 33 06 664 A1 ist grundsätzlich eine zweistufige Ausführung eines einzelnen Abgaswäschers mit einem Hauptwaschbereich und einem Feinwaschbereich bekannt.

Aufgabe der Erfindung ist es deshalb, ein gattungsgemäßes Verfahren so weiter zu entwickeln, dass die Abgasbelastung deutlich reduziert werden kann.

Diese Aufgabe wird bei einem verfahren der eingangs bezeichneten Art erfindungsgemäß dadurch gelöst, dass das Zusatzwasser zunächst in einen oberseitig durch den Tropfenabscheider und unterseitig durch einen flüssigkeitsundurchlässigen Trennboden begrenzten Feinwaschbereich des ersten Wäschers eingeleitet und auf den wenigstens einen Tropfenabscheider gesprüht wird und die im Feinwaschbereich entstehende wässrige Lösung anschließend in den zweiten Wäscher geleitet wird, wobei die aus dem zweiten Wäscher austretende wässrige Lösung in den unterhalb des Trennbodens vorgesehenen Hauptwaschbereich des ersten Wäschers eingeleitet wird, in den auch das Abgas eintritt.

Anders als beim bekannten Verfahren wird somit das Zusatzwasser zunächst vollständig in den in dem ersten Wäscher vorgesehenen zusätzlichen Feinwaschbereich eingeleitet, in welchen das tropfenbeladene Abgas vor dem Durchtritt durch den Tropfenabscheider eintritt. Im Feinwaschbereich erfolgt dabei durch das Zusatzwasser eine starke Verdünnung, so dass die Harnstoffkonzentration der Tropfen erheblich herabgesetzt wird. Gleichzeitig folgt auch zusätzlich eine Abreinigung des Tropfenabscheiders.

Durch die starke Verdünnung der Tropfen ist es möglich, die Harnstoffkonzentration der wässrigen Lösung im eigentlichen Hauptwaschbereich des Wäschers deutlich zu erhöhen, so dass der Energieaufwand für die nachfolgende Eindampfung der wässrigen Lösung stark verringert werden kann. Außerdem kann durch diese Verfahrensführung erreicht werden, dass die Staubbelastung im Abgas von bisher erreichbaren Werten von etwa 50 mg/m³ auf 20 mg/m³ reduziert werden kann.

Die aus dem zweiten Wäscher austretende wässrige Lösung wird in den ersten Wäscher geleitet, und zwar selbstverständlich in den unterhalb des Trennbodens vorgesehenen Hauptwaschbereich des ersten Wäschers, in den auch das Abgas eintritt.

Zur Trennung des Feinwaschbereiches und des Hauptwaschbereiches des ersten Wäschers wird bevorzugt ein Glockenboden verwendet. Grundsätzlich sind auch andere Trennböden einsetzbar, die flüssigkeitsundurchlässig, aber gasdurchlässig sind.

Um die Ammoniakkonzentration im Abgas zu reduzieren, ist in weiterer vorteilhafter Ausgestaltung vorgesehen, dass in den Feinwaschbereich des ersten Wäschers eine Säure eingeleitet wird. Beispielsweise kann Schwefel- oder Salpetersäure verwendet werden. Eine derartige Säurebehandlung ist grundsätzlich bekannt, beispielsweise aus EP 0 440 932 B1.

Um die Weiterverarbeitung der aus dem ersten Wäscher austretenden wässrigen Lösung energetisch zu optimieren, ist bevorzugt vorgesehen, dass im Hauptwaschbereich des ersten Wäschers eine 40 - 60 %-ige, vorzugsweise 55 %-ige Harnstoffkonzentration eingestellt wird. Der Energieaufwand für die Eindampfung kann dadurch deutlich reduziert werden, ohne dass diese sehr hohe Harnstoffkonzentration in der wässrigen Lösung zu Problemen bei der Reinigung des Abgases führt, da, wie vorerwähnt, im Feinwaschbereich eine starke Verdünnung der in diesen Bereich eintretenden Tropfen erfolgt.

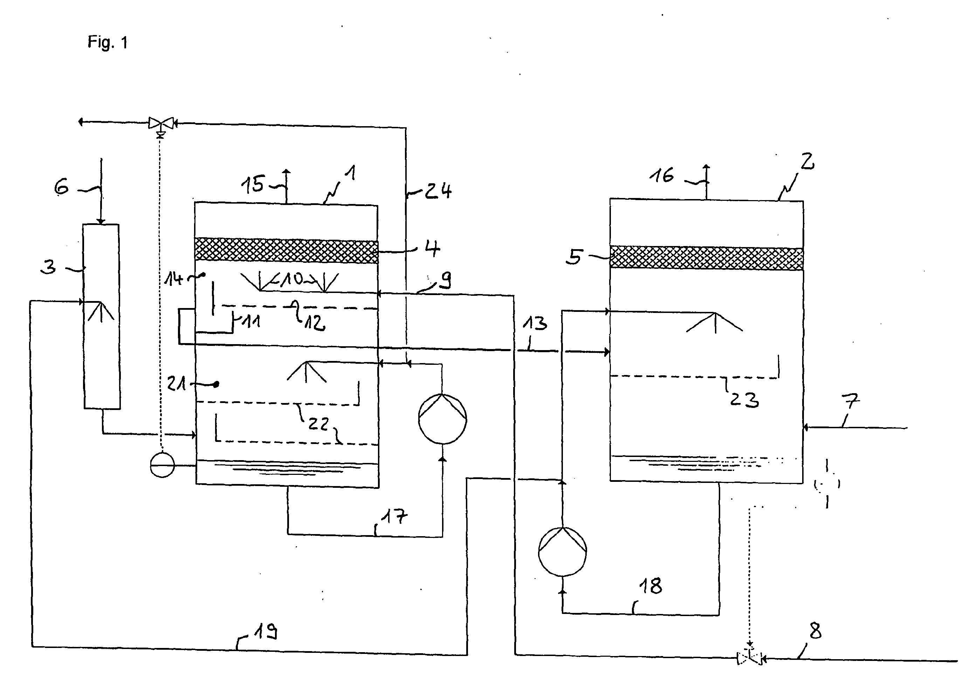

Die Erfindung ist nachstehend anhand der Zeichnung beispielhaft näher erläutert. Diese zeigt in
- Fig. 1: ein Prinzipschema zur Durchführung des Verfahrens und in
- Fig. 2: ein Detail der Fig. 1 in einer speziellen Ausge- staltung.

Eine Anlage zur Durchführung des Verfahrens weist zunächst einen ersten Wäscher 1 und einen zweiten Wäscher 2 auf. Dem ersten Wäscher 1 ist eine Vorreinigungsstufe 3 vorgeschaltet. Im oberen Bereich des ersten Wäschers 1 ist ein Tropfenabscheider 4 (Demister) angeordnet, genauso wie im zweiten Wäscher 2 ein Tropfenabscheider 5. Der erste Wäscher 1 ist in zwei Waschbereiche unterteilt, wobei unterhalb des Tropfenabscheiders 4 unter Ausbildung eines Feinwaschbereiches 14 ein flüssigkeitsundurchlässiger, aber gasdurchlässiger Trennboden 12 (z.B. Glockenboden) sowie ein Ablauf 11 angeordnet sind. Unterhalb des Trennbodens 12 befindet sich der Hauptwaschbereich 21 des ersten Wäschers 1.

Die vorbeschriebenen Anlagenteile sind bevorzugt Bestandteil einer Anlage zur Herstellung von Düngemitteln, vorzugsweise Harnstoff, und stehen mit einem nicht dargestellten Granulator und einem Kühler in Verbindung. Aus dem nicht dargestellten Granulator wird mit Ammoniak und Staub beladenes Abgas zugeführt, und zwar zunächst in die Vorreinigungsstufe 3, was durch einen Pfeil 6 angedeutet ist. Das Abgas tritt durch die Vorreinigungsstufe 3 hindurch und wird in den Hauptwaschbereich 21 des ersten Wäschers 1 eingeleitet. Ebenfalls beladenes Kühlgas wird direkt dem zweiten Wäscher 2 zugeführt, dies ist durch einen Pfeil 7 angedeutet.

Zusatzwasser, vorzugsweise gereinigtes oder ungereinigtes Prozesswasser, wird unmittelbar dem Feinwaschbereich 14 des ersten Wäschers 1 zugeführt, wobei die Wasserzuleitung durch Pfeile 8, 9 angedeutet ist. Die Wasserzuleitung mündet innerhalb des Wäschers 1 unterhalb des Tropfenabscheiders 4 in nach oben gerichtete Sprühköpfe 10, derart, dass das Zusatzwasser gegen den Tropfenabscheider 4 gesprüht wird und diesen dadurch abreinigt. Das Zusatzwasser vermischt sich mit den durch den Trennboden 12 hindurchtretenden Tropfen und führt zu einer starken Harnstoffkonzentrationsverdünnung der Tropfen, so dass die Tropfen z.B. nur noch eine Harnstoffkonzentration von 1 bis 4 % aufweisen, selbst wenn die Harnstoffkonzentration im Hauptwaschbereich 21 bei 55 bis 60 % liegt. Das Zusatzwasser reichert sich dadurch an und tritt als wässrige Lösung durch den Ablauf 11 aus, an den eine Leitung 13 angeschlossen ist, welche in den zweiten Wäscher 2 mündet, wodurch die wässrige Lösung in den zweiten Wäscher 2 geleitet wird.

Das zu reinigende Abgas tritt somit nach dem Durchtritt durch die Vorreinigunsstufe 3 zunächst in den Hauptwaschbereich 21 des ersten Wäschers 1 ein, in welchem Siebböden 22 oder dgl. angeordnet sind, und gelangt dann durch den Trennboden 12 hindurch in den Feinwaschbereich 14, in dem durch die Vermischung mit dem Zusatzwasser eine starke Verdünnung und Reduzierung der am Abgas anhaftenden Tropfen stattfindet. Nachfolgend tritt das Abgas durch den Tropfenabscheider 4 hindurch und tritt dann am Kopf des ersten Wäschers 1 gereinigt aus (Pfeil 15).

Das zu reinigende Kühlgas tritt im unteren Bereich (Pfeil 7) in den zweiten Wäscher 2 ein, in dem ebenfalls Siebböden 23 angeordnet sind, um im Gegenstrom durch die eingeleitete wässrige Lösung und anschließend durch die Tropfenabscheider 5 gereinigt am Kopf des zweiten Wäschers auszutreten (Pfeil 16).

Das jeweilige Sumpfprodukt in den beiden Wäschern 1 und 2 wird in üblicher Weise umgewälzt, was durch entsprechende Kreisläufe 17 bzw. 18 angedeutet ist. Dabei wird aus dem Kreislauf 18 die wässrige Lösung abgezweigt und über eine Leitung 19 der Vorreinigungsstufe 3 zugeführt. Aus der Vorreinigungsstufe 3 tritt somit wässrige Lösung und Abgas in den Hauptwaschbereich 21 des ersten Wäschers 1 ein.

Durch den erheblichen Verdünnungs- bzw. Reinigungseffekt im Feinwaschbereich 14 ist es möglich, im Hauptwaschbereich 21 des ersten Wäschers 1 eine Harnstoffkonzentration in der wässrigen Lösung von etwa 60 % einzustellen, d.h. die aus dem Wäscher 1 austretende wässrige Lösung (Leitung 24) weist dann eine Harnstoffkonzentration von 60 % auf, so dass diese wässrige Lösung mit gegenüber dem Stand der Technik wesentlich geringerem energetischen Aufwand zwecks Weiternutzung eingedampft werden kann. Trotz dieser hohen Harnstoffkonzentration im Hauptwaschbereich 21 ist es aufgrund der Verfahrensführung mit der Einleitung des Zusatzwassers in den Feinwaschbereich 14 möglich, im Feinwaschbereich 14 selbst Harnstoffkonzentrationen in einer Größenordnung von 1 bis 4 % zu erreichen. Die Harnstoffkonzentration im zweiten Wäscher 2 liegt bei etwa 10 %.

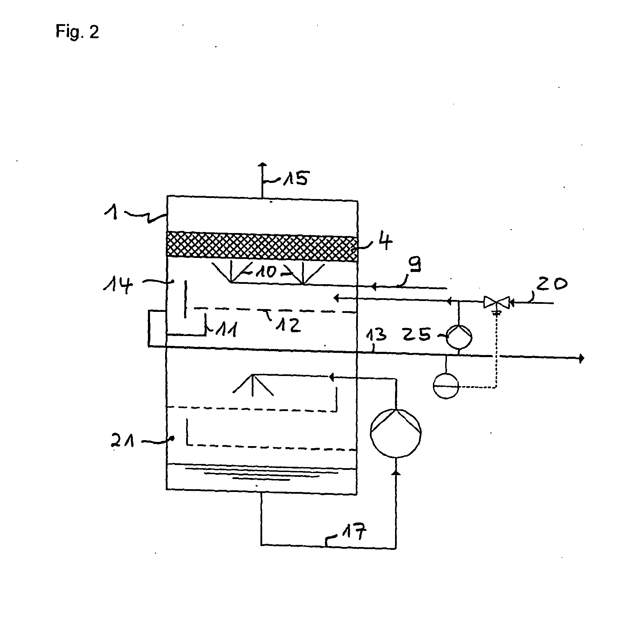

Wie Fig. 2 zeigt, ist bevorzugt zusätzlich vorgesehen, dass in den Feinwaschbereich 14 zur Verringerung der Ammoniakbelastung des Abgases eine Säure eingeleitet wird, was durch einen Pfeil 20 angedeutet ist. Dazu wird ein Teil der aus dem Ablauf 11 des ersten Wäschers 1 austretenden wässrigen Lösung aus der Leitung 13 im Kreislauf über eine Pumpe 25 zur Einleitung der Säure in den Feinwaschbereich 14 zurückgeführt. Als Säure kann beispielsweise Schwefel- oder Salpetersäure eingesetzt werden. Eine solche Säurebehandlung ist grundsätzlich z.B. aus EP 0 440 932 B1 bekannt. Die Zugabe von Säure (Strom 20) erfolg bevorzugt in einer korrosionsbeständigen, selbstansaugenden Düse nach der Pumpe (z.B. Strahldüse), deren Zustrom geregelt wird. Dabei kann die Druckleitung der Pumpe ganz oder teilweise als Treibstrahlstrom angesetzt werden.

Das Verfahren eignet sich grundsätzlich auch alternativ für einen Wäscher, in dem mehrere Tropfenabscheider stehend angeordnet sind. Das Zusatzwasser wird dann in entsprechender Weise zunächst in einen Feinwaschbereich des Wäschers für das aus der Granulation kommende Abgas geleitet.

## Patentansprüche

1. Verfahren zur Entfernung von Ammoniak und Staub aus einem Abgas, das bei der Herstellung von Harnstoff anfällt, bei welchem das Abgas in einen ersten Wäscher und ein Kühlgas aus dem Herstellungsprozess in einen zweiten Wäscher eingeleitet werden und in den ersten Wäscher Zusatzwasser und in den zweiten Wäscher eine wässrige Lösung eingeleitet werden, wobei sowohl das Abgas als auch das Kühlgas vor dem Austritt aus dem jeweiligen Wäscher durch wenigstens einen Tropfenabscheider hindurchtritt und wobei die aus dem zweiten Wäscher austretende wässrige Lösung in den ersten Wäscher eingeleitet wird, in den auch das Abgas eintritt,
wobei das Zusatzwasser zunächst vollständig in einen oberseitig durch den Tropfenabscheider und unterseitig durch einen flüssigkeitsundurchlässigen Trennboden begrenzten Feinwaschbereich des ersten Wäschers eingeleitet und auf den wenigstens einen Tropfenabscheider gesprüht wird, wodurch im Feinwaschbereich durch das Zusatzwasser eine starke Verdünnung erfolgt, so dass die Harnstoffkonzentration der Tropfen herabgesetzt wird, und die im Feinwaschbereich entstehende wässrige Lösung anschließend in den zweiten Wäscher geleitet wird und die aus dem zweiten Wäscher austretende wässrige Lösung in den unterhalb des Trennbodens vorgesehenen Hauptwaschbereich des ersten Wäschers eingeleitet wird.

2. Verfahren nach Anspruch 1,
**dadurch gekennzeichnet,**
**dass** als Trennboden (12) ein Glockenboden verwendet wird.

3. Verfahren nach Anspruch 1 oder 2,
**dadurch gekennzeichnet,**
**dass** in den Feinwaschbereich (14) des ersten Wäschers (1) eine Säure eingeleitet wird.

4. Verfahren nach Anspruch 1 oder einem der folgenden, **dadurch gekennzeichnet,**
**dass** im Hauptwaschbereich (21) des ersten Wäschers (1)
eine 40 - 60 %-ige, vorzugsweise 55 %-ige Harnstoffkonzentration eingestellt wird.

## Claims

1. A method of removing ammonia and dust from a waste gas which occurs in the production of urea, in which the waste gas is introduced into a first washer and a cooling gas from the production process is introduced into a second washer and additional water is introduced into the first washer and an aqueous solution is introduced into the second washer, wherein both the waste gas and also the cooling gas pass through at least one drop separator before issuing from the respective washer and wherein the aqueous solution issuing from the second washer is introduced into the first washer into which the waste gas also passes,
wherein the additional water is firstly introduced completely into a fine-washing region of the first washer, that is delimited at the top by the drop separator and at the bottom by a liquid-impermeable separating floor, and is sprayed on to the at least one drop separator whereby great dilution is effected in the fine-washing region by the additional water so that the urea concentration of the drops is reduced and the aqueous solution formed in the fine-washing region is then introduced into the second washer and the aqueous solution issuing from the second washer is introduced into the main washing region of the first washer, that is beneath the separating floor.

2. A method according to claim 1 **characterised in that** a bell floor is used as the separating floor (12).

3. A method according to claim 1 or claim 2 **characterised in that** an acid is introduced into the fine-washing region (14) of the first washer (1).

4. A method according to claim 1 or one of the following claims **characterised in that** a 40 - 60%, preferably 55% urea concentration is set in the main washing region (21) of the first washer (1).

## Revendications

1. Procédé d'élimination d'ammoniac et de poussières d'un effluent gazeux qui est produit lors de la production d'urée, dans lequel l'effluent gazeux est acheminé dans un premier dispositif d'épuration et un gaz de refroidissement est acheminé depuis le procédé de production vers un deuxième dispositif d'épuration, et un complément d'eau est amené vers le premier dispositif d'épuration et une solution aqueuse vers le deuxième dispositif d'épuration, l'effluent gazeux ainsi que le gaz de refroidissement passant, avant la sortie des dispositifs d'épuration respectifs, à travers au moins un séparateur de gouttelettes et la solution aqueuse sortant du deuxième dispositif d'épuration étant acheminée vers le premier dispositif d'épuration dans lequel pénètre également l'effluent gazeux,
le complément d'eau étant tout d'abord acheminé complètement dans une zone d'épuration fine délimitée, au niveau supérieur, par le séparateur de gouttelettes et, au niveau inférieur, par un plancher de séparation imperméable aux liquides, et pulvérisé sur au moins un séparateur de gouttelettes, une forte dilution se produisant ainsi dans la zone d'épuration fine par le complément d'eau de sorte que la concentration d'urée des gouttes diminue, et la solution aqueuse formée dans la zone d'épuration fine étant ensuite amenée vers le deuxième dispositif d'épuration et la solution aqueuse sortant du deuxième dispositif de séparation étant acheminée vers la zone d'épuration principale prévue sous le plancher de séparation du premier dispositif d'épuration.

2. Procédé selon la revendication 1, **caractérisé en ce que** l'on utilise un plateau à coupelles en tant que plancher de séparation (12).

3. Procédé selon la revendication 1 ou 2, **caractérisé en ce qu'**un acide est amené dans la zone d'épuration fine (14) du premier dispositif d'épuration (1).

4. Procédé selon la revendication 1 ou l'une des suivantes, **caractérisé en ce que** l'on ajuste dans la zone d'épuration principale (21) du premier dispositif d'épuration (1) une concentration d'urée de 40 à 60 %, de préférence de 55 %.
